# EUROPÄISCHE PATENTANMELDUNG

(11) **EP 1 033 480 A1**
(43) Veröffentlichungstag der Anmeldung: **06.09.2000**
(21) Anmeldenummer: 99103081.8
(22) Anmeldetag: 17.02.1999
(51) Int. Cl.: F01N 3/20, B01D 53/94

(54) **Verfahren zur Dosierung eines Reduktionsmittels in stickoxidhaltiges Abgas einer Brennkraftmaschine**

(71) Anmelder: MAN NUTZFAHRZEUGE AG, 80995 München (DE)
(72) Erfinder: Döring, Andreas, Dipl.-Ing., 90403 Nürnberg (DE); Zuther, Frank Ingo, Dipl.-Ing., 91126 Schwabach (DE)

(57) **Zusammenfassung**

Verfahren zur Dosierung eines Reduktionsmittels in stickoxidhaltiges Abgas einer Brennkraftmaschine vor einem Katalysatorsystem mit NO_{X}- Reduktionsaktivität, geringer Wärmekapazität und geringer Speicherfähigkeit für Reduktionsmittel, bei dem die Reduktionsmittelrate in Verbindung mit einer Referenz-Brennkraftmaschine ermittelten maschinenspezifischen Werte für die NO_{X}-Konzentration und der Abgasmenge sowie wenigstens noch der während des Brennkraftmaschinenbetriebes aktuell sensierte Temperatur des Abgases errechnet wird, und daß diese Reduktionsmittelrate in Abhängigkeit von erfaßten Lastzustandsänderungen der Brennkraftmaschine einer dynamischen bzw. hochdynamischen Korrektur unterzogen und eine entsprechend angepaßte Reduktionsmittelmenge dem Abgasstrom zugeführt wird, wobei für den instationären Betrieb eine Korrektur über die Änderung der Katalysatorbelastung, entweder bestimmt aus Kennfeldern oder durch Sensoren gemessen, erfolgt.

## Beschreibung

Die Erfindung betrifft ein Verfahren zur Dosierung eines Reduktionsmittels gemäß dem Gattungsbegriff des Patentanspruches 1.

Bei der selektiven katalytischen Reduktion (SCR ) von NOₓ wird je nach Betriebszustand der Brennkraftmaschine und des SCR-Katalysators eine bestimmte Menge Reduktionsmittel in den Abgasstrom eindosiert, um NOₓ zu N₂ zu reduzieren. Im instationären Betrieb wird diese Dosierung bei Anwendung in Nutzfahrzeugen aus motorspezifischen Kennfeldern ermittelt, da wegen nicht verfügbarer Sensoren eine Steuerung ohne Rückmeldung des tatsächlichen Umsatzes bzw. eines auftretenden Schlupfes des Reduktionsmittels erfolgen muß.

Ausgehend von einer derartigen Dosiervorrichtung liegt der Erfindung die Aufgabe zugrunde, die Dosierung bei plötzlichen Laständerungen der Brennkraftmaschine zu verbessern.

Gelöst wird diese Aufgabe durch die kennzeichnenden Merkmale des Patentanspruches 1.

Durch die Berücksichtigung der Änderung der Katalysatorbelastung kann ggf. in Verbindung mit der Ermittlung der Einflußgrößen wie NOₓ-Konzentration, Abgasmenge und Katalysatortemperatur die Dosierung des Reduktionsmittels spürbar verbessert werden, so daß der Reduktionsmittelschlupf ( beispielsweise Ammoniak, bei Verwendung von Harnstoff), wesentlich reduziert wird.

Die Unteransprüche 2 bis 5 zeigen vorteilhafte Möglichkeiten auf, den Einfluß der Änderung der Katalysatorbelastung genauer zu verifizieren.

Zum besseren Verständnis der erfindungsgemäßen Maßnahmen werden die Vorgänge bei instationärem Betrieb der Brennkraftmaschine, insbesondere bei plötzlicher Laständerung, nachfolgend erläutert.

Bei Verfahren zur genauen Dosierung von Reduktionsmittel ins Abgas ist es beim Einsatz in Nutzfahrzeugen äußerst schwierig, die Menge von abbaubarem Stickoxid zu bestimmen. So kommt es bei plötzlicher Laständerung durch kurzzeitige Rückströmungen, starke Druckschwankungen und bei Katalysatoren mit ausgeprägtem Speicherverhalten für NOₓ und/oder Reduktionsmittel zu unkontrollierbaren Betriebszuständen und somit zu unerwünschtem Reduktionsmittelschlupf oder zu unzureichendem Umsatz. Besonders problematisch ist dies bei Katalysatoren ohne ausgeprägtes Speicherverhalten für Reduktionsmittel, wie z.B. bei Metallträgerkatalysatoren, die kurzzeitig auftretende Reduktionsmittelspitzen nicht einspeichern und somit auch nicht abfangen können. Aus diesem Grund muß eine Dosierung für instationäre Prozesse dem dynamischen Verhalten der verwendeten Katalysatoren angepaßt werden, um Emissionen von unterbrauchtem Reduktionsmittel zu vermeiden und gleichzeitig hohe NOₓ-Umsatzgraten zu erzielen.

Die Erfindung bezieht sich daher auf die Einbindung von Änderungen der Katalysatorbelastung in die Dosiersteuerung. Somit ist es möglich, die Dosierung bei Belastungsänderung optimal anzupassen, um kurzzeitige Fehldosierung zu vermeiden und so den optimalen Umsatz ohne Reduktionsmittelschlupf zu erzielen. Da je nach Katalysatortemperatur mehr oder weniger NOₓ reduziert werden kann, Fehldosierungen also mehr oder weniger schnell ausgeglichen werden, ist die Einbeziehung der Katalysatortemperatur sinnvoll, um im optimalen Temperaturfenster nicht zu viel an Umsatz zu verlieren. Das gleiche gilt für die NOₓ-Konzentrationen, da bei niedrigen NOₓ-Konzentrationen der Abbau von überschüssigem Reduktionsmittel langsamer abläuft, als bei hohen Konzentrationen. Zudem ist der Einfluß des NO₂-Gehaltes bei Verwendung von Vorkatalysatoren, die den NO₂-Anteil im Abgas anheben, zu berücksichtigen, da durch Stickstoffdioxid die SCR-Reaktion beschleunigt wird und so das System bei hohen NO₂-Anteilen weniger leicht überlastet werden kann. Ein weiterer Einfluß ist durch die Abgasmenge gegeben, da bei niedrigen Abgasmengen die Verweilzeit im Katalysator höher ist und deshalb mehr NOₓ umgesetzt werden kann, als bei großen Abgasmengen. Der Einfluß der Änderung der Katalysatorbelastung kann in Verbindung mit den oben aufgeführten Einflußgrößen NOₓ-Konzentration, NO₂-Anteil, Abgasmenge und Katalysatortemperatur genauer bestimmt und dann zur Steuerung bei instationären Prozessen verwendet werden.

Die zur Steuerung notwendige Bestimmung des Grades der Änderung der Katalysatorbelastung kann aus Motordaten, wie z.B. Einspritzmengen-, Gaspedalstellungs- oder Ladeluftdruckänderung und/oder aus Abgastemperaturschwankungen und/oder aus NOₓ-Konzentrationsänderungen, entweder aus Kennfeldern bestimmt oder durch Sensoren gemessen während des Betriebs ermittelt werden. Die mögliche Verknüpfung mit NOₓ-Konzentration, NO₂-Anteil, Abgasmenge und Katalysatortemperatur erfolgt über katalysatorspezifische Kennfelder durch die das Katalysatorverhalten im Instationärbereich charakterisiert wird. Die für die Auslegung der Kennfelder notwendigen Daten müssen zuvor an Referenzkatalysator und -brennkraftmaschinen ermittelt werden.

In Verbindung mit den für die Stationärpunkte gültigen Umsatzraten ergibt sich so eine Dosierungssteuerung, die hochdynamsichen Lastsprüngen folgen kann und gleichzeitig im Stationärbetrieb nicht an Umsatz einbüßt.

## Patentansprüche

1. Verfahren zur Dosierung eines Reduktionsmittels, insbesondere Harnstoff bzw. wässrige Harnstofflösung, in stickoxidhaltiges Abgas einer Brennkraftmaschine räumlich in die Abgasleitung vor einem Katalysatorsystem mit wenigstens NOₓ- Reduktionsaktivität, geringer Wärmekapazität und geringer Speicherfähigkeit für Reduktionsmittel, daß die in Verbindung mit einer Referenz-Brennkraftmaschine ermittelten maschinenspezifischen Werte für die NOₓ - Konzentration und Abgasmenge sowie wenigstens noch die während des Brennkraftrnaschinenbetriebes aktuell sensierte Temperatur des Abgases und gegebenenfalls noch die Reduktionsmittelkonzentration als Regelparameter für die Reduktionsmittel-Dosierung herangezogen werden und aus diesen Parametern eine Reduktionsmittelrate errechnet wird, und daß diese solchermaßen errechnete Reduktionsmittelrate in Abhängigkeit von erfaßten Lastzustandsänderungen der Brennkraftmaschine einer dynamischen bzw. hochdynamischen Korrektur unterzogen und eine entsprechend angepaßte Reduktionsmittel menge dem Abgasstrom zugeführt wird, dadurch gekennzeichnet, daß für den instationären Betrieb eine Korrektur über die Änderung der Katalysatorbelastung, z.B. ermittelt aus der Einspritzmengen-, Gaspedalstellungs- oder Ladeluftdruckänderung und/oder aus Abgastemperaturschwankungen und/oder aus NOₓ-Konzentrationsänderungen, entweder bestimmt aus Kennfeldern oder durch Sensoren gemessen, erfolgt.

2. Verfahren nach Anspruch 1, dadurch gekennzeichnet, daß für die Bewertung des Einflusses der Änderung der Katalysatorbelastung die Katalysatortemperatur mit berücksichtigt wird.

3. Verfahren nach Anspruch 1 und 2, dadurch gekennzeichnet, daß für die Bewertung des Einflusses der Änderung der Katalysatorbelastung die NOx-Rohkonzentration mit berücksichtigt wird.

4. Verfahren nach den Ansprüchen 1 bis 3, dadurch gekennzeichnet, daß bei Einsatz eines Vorkatalysators zur Anhebung des NO₂-Anteils für die Bewertung des Einflusses der Änderung der Katalysatorbelastung der NO₂-Anteil mit berücksichtigt wird.

5. Verfahren nach den Ansprüchen 1 bis 4, dadurch gekennzeichnet, daß für die Bewertung des Einflusses der Änderung der Katalysatorbelastung die Abgasmenge mit berücksichtigt wird.
